# EUROPÄISCHE PATENTSCHRIFT

(11) **EP 3 301 411 B1**
(45) Veröffentlichungstag und Bekanntmachung des Hinweises auf die Patenterteilung: **08.04.2020**
(21) Anmeldenummer: 17193714.7
(22) Anmeldetag: 28.09.2017
(51) Int. Cl.: G01F 1/84

(54) **MESSROHREINHEIT UND CORIOLIS-MASSEDURCHFLUSSMESSGERÄT**
MEASURING PIPE UNIT AND CORIOLIS MASS FLOW METER
UNITÉ DE TUYAU DE MESURE ET DÉBITMÈTRE DE MASSE DU TYPE CORIOLIS

(30) Priorität: 03.10.2016 DE 102016118695
(43) Veröffentlichungstag der Anmeldung: 04.04.2018
(73) Patentinhaber: Krohne AG, 4019 Basel (CH)
(72) Erfinder: Blackmore, James, Wollaston, Northamptonshire NN29 7LH (GB)
(74) Vertreter: Gesthuysen Patent- und Rechtsanwälte

(56) Entgegenhaltungen:
- DE-A1-102014 119 073
- US-A- 5 540 106
- US-A1- 2002 139 199
- US-A1- 2015 082 916

## Beschreibung

Die Erfindung geht aus von einer Messrohreinheit für den Einsatz in einem Coriolis-Massedurchflussmessgerät mit einem Einlassende und einem Auslassende, umfassend wenigstens zwei Messrohre und wenigstens zwei Übergangsstücke, wobei jeweils ein Übergangsstück an einem Messrohr am Einlassende angeordnet ist, wobei jedes Messrohr einen Messrohrquerschnitt und jedes Übergangsstück am Einlass einen Übergangsstückquerschnitt aufweist.

Darüber hinaus geht die Erfindung aus von einem Coriolis-Massedurchflussmessgerät mit wenigstens einer Messrohreinheit mit einem Einlassende und einem Auslassende, wobei die Messrohreinheit wenigstens zwei Messrohre und wenigstens zwei Übergangsstücke aufweist, wobei jeweils ein Übergangsstück an einem Messrohr am Einlassende der Messrohreinheit angeordnet ist, wobei jedes Messrohr einen Messrohrquerschnitt und jedes Übergangsstück am Einlass einen Übergangsstückquerschnitt aufweist.

Coriolis-Massedurchflussmessgeräte eignen sich für die Bestimmung des Massedurchflusses von Gasen und/oder Flüssigkeiten in besonders vielfältigen Anwendungsgebieten. Dabei wird zur Bestimmung des Massedurchflusses ausgenutzt, dass auf das zu vermessende Fluid die Corioliskraft wirkt, wenn es durch ein in Schwingung versetztes Rohr fließt. Demnach weisen Coriolis-Massedurchflussmessgeräte grundsätzlich wenigstens ein von einem Fluid durchströmtes Messrohr, einen Schwingungserzeuger, der das Messrohr in Schwingung versetzt, sowie zwei Schwingungsaufnehmer auf, wobei die Schwingungsaufnehmer am Einlassende und am Auslassende des Messrohrs angeordnet sind. Wird das Messrohr im Betrieb von dem Schwingungserzeuger in Schwingung versetzt, so wird von den Schwingungsaufnehmern einlassseitig und auslassseitig die Schwingung des Messrohrs erfasst. Wird das Messrohr nun zusätzlich von einem Fluid durchströmt, so bewirkt die Corioliskraft eine zusätzliche Kraft auf das Messrohr. Diese ist als Phasenunterschied zwischen der einlassseitigen und der auslassseitigen Schwingung messbar. Der Phasenunterschied ist proportional zum Massestrom des Fluids.

Wenn im Rahmen der vorliegenden Erfindung von einem Einlassende oder von einlassseitig bzw. von einem Auslassende oder von auslassseitig gesprochen wird, so ist der Bezugspunkt stets die Strömungsrichtung des nachzuweisenden Fluids im Betrieb des Durchflussmessgeräts. Dementsprechend entspricht das Einlassende der Seite der Messrohreinheit, durch die das Fluid in die Messrohreinheit hineinfließt, und das Auslassende entspricht demzufolge der Seite, durch die das Fluid die Messrohreinheit verlässt.

Aus dem Stand der Technik bekannt sind verschiedene Ausgestaltungen von Coriolis-Massedurchflussmessgeräten, die sich insbesondere in der Anzahl und der Ausgestaltung der Messrohre unterscheiden. Eine besonders einfache Ausgestaltung weist lediglich ein einziges gerades Messrohr auf. Eine weitere Ausgestaltung weist eine Doppelrohranordnung auf, bei der die Messrohre einander entgegengesetzt zur Schwingung angeregt werden. Alternativ zum Einsatz von geraden Messrohren werden Rohrbögen, beispielsweise in Form von U-Rohren, eingesetzt, wobei ebenfalls sowohl Ausgestaltungen mit einem einzelnen Rohrbogen als auch mit einer Doppelrohranordnung bekannt sind.

Für den Einsatz in der Praxis werden Coriolis-Massedurchflussmessgeräte in bestehende Rohrleitungssysteme eingebaut und mit den Rohrleitungen über eine Flanschverbindung verbunden. Weist das Coriolis-Massedurchflussmessgerät mehr als ein Messrohr, beispielsweise zwei oder vier Messrohre auf, so muss der zu vermessende Fluidstrom vorzugsweise gleichmäßig über einen Strömungsteiler auf die einzelnen Messrohre aufgeteilt werden.

Aus dem Stand der Technik ist es bekannt, beispielsweise eine Halterung für das Gehäuse des Durchflussmessgeräts vorzusehen, welche zumindest am einlassseitigen Ende und vorzugsweise ebenfalls am auslassseitigen Ende der Messrohre angeordnet ist, und welche gleichzeitig als Strömungsteiler ausgestaltet ist. Dazu weist die Halterung einen Anbindungsbereich an eine Rohrleitung auf. Dieser Anbindungsbereich weist Öffnungen auf, wobei jede Öffnung mit einem Messrohr beispielsweise durch eine Schweißverbindung verbunden ist.

Nachteilig an dieser Ausgestaltung ist, dass jede Halterung für genau einen Messaufbau, d. h. eine bestimmte Anzahl an Messrohren geeignet ist. Unterschiedliche Messaufbauten erfordern demnach eine Vielzahl an verschiedenen Halterungen. Da die Ausgestaltung einer entsprechenden Halterung aber sehr komplex ist, ist der Aufwand, diese Vielzahl an Halterungen zu fertigen und vorzuhalten, besonders hoch.

Darüber hinaus weist die zuvor dargelegte Ausgestaltung aus dem Stand der Technik den Nachteil auf, dass das zu vermessende Fluid innerhalb des Durchflussmessgerätes Kontakt mit wenigstens zwei Materialien, nämlich dem Material der Halterung und dem Material der Messrohre, aufweist.

Die Druckschrift EP 2 650 656 A1 offenbart ein Coriolis-Massedurchflussmessgerät, welches zur Anbindung der beiden Messrohre an eine Rohrleitung ein zusätzliches Übergangs- und ein Anschlussstück aufweist, wobei das Übergangs- und das Anschlussstück aus einem Werkstück hergestellt sind. Ein Massedurchflussmessgerät, welches ein entsprechendes Übergangs- und Anschlussstück aufweist, weist ebenfalls die zuvor dargelegten Nachteile auf.

US 5 540 106 A offenbart eine Messrohreinheit für den Einsatz in einem Coriolis-Massedurchflussmessgerät. US 2002/139199 A1 offenbart eine Messrohreinheit umfassend zwei Messrohre und ein Strömungsteiler. DE 10 2014 119073 A1 offenbart einen Messaufnehmer vom Vibrationstyp mit einem Gehäusemodul.

Ausgehend von dem zuvor beschriebenen Stand der Technik ist es daher Aufgabe der Erfindung, eine Messrohreinheit und ein Coriolis-Massedurchflussmessgerät anzugeben, die die Nachteile des Standes der Technik vermeiden.

Gemäß einer ersten Lehre der vorliegenden Erfindung wird die Aufgabe durch die eingangs genannte Messrohreinheit dadurch gelöst, dass das Übergangsstück einstückig mit dem zugehörigen Messrohr ausgestaltet ist und dass der Übergangsstückquerschnitt in seiner Form und/oder in seiner Größe von dem zugehörigen Messrohrquerschnitt abweicht, wobei die Messrohre derart angeordnet und ausgerichtet sind, dass die Übergangsstückquerschnitte einen Gesamtquerschnitt und damit einen Strömungsteiler bilden.

Erfindungsgemäß wurde erkannt, dass die Anbindung einer Mehrzahl an Messrohren an eine einzige Rohrleitung dadurch vereinfacht werden kann, dass jedes Messrohr einstückig mit einem Übergangsstück ausgestaltet ist, wobei die Gesamtheit der Übergangsstücke die Anbindung einer Mehrzahl Messrohre an eine Rohrleitung ermöglichen. Jedes Übergangsstück ist dabei derart ausgestaltet und im Betrieb derart angeordnet, dass es einen Teil des Fluidstrom von der einen Rohrleitung in das zugehörige Messrohr leitet. In einer Ausgestaltung ist das Übergangsstück eine Art Einlauftrichter in das zugehörige Messrohr.

Erfindungsgemäß ist das Übergangsstück derart ausgestaltet, dass der Übergangsstückquerschnitt in seiner Form und/oder in seiner Größe von dem Messrohrquerschnitt abweicht. Erfindungsgemäß ist das Übergangsstück in seiner Ausgestaltung einerseits an den Querschnitt der einen Rohrleitung und gleichzeitig an den Messaufbau, im Detail an die Anzahl der Messrohre angepasst.

Gemäß einer Ausgestaltung bleibt die Form des Übergangsstückquerschnitts erhalten und der Übergangsstückquerschnitt weicht lediglich in der Größe von dem Messrohrquerschnitt ab.

Gemäß einer weiteren Ausgestaltung bleibt die Größe des Übergangsstückquerschnitts erhalten und der Übergangsstückquerschnitt weicht lediglich in der Form von dem Messrohrquerschnitt ab

Üblicherweise weicht der Übergangsstückquerschnitt in seiner Form und in seiner Größe von dem Messrohrquerschnitt ab.

Zudem sind die Messrohre erfindungsgemäß derart angeordnet und ausgerichtet, dass die Übergangsstückquerschnitte der Messrohre einen Gesamtquerschnitt und damit einen Strömungsteiler bilden. Dieser Gesamtquerschnitt kann in einer Ebene liegen, alternativ können die einzelnen Übergangsstückquerschnitte aber auch einen Winkel, der kleiner oder größer als 180° ist, zueinander ausbilden. Insgesamt wird durch die Ausbildung des Gesamtquerschnitts ein Strömungsteiler ausgebildet, wodurch in vorteilhafter Weise auf ein zusätzliches Bauelement zur Teilung des zu vermessendes Fluidstroms verzichtet werden kann.

Es kann durch die Bereitstellung einer erfindungsgemäßen Messrohreinheit insbesondere auf die Herstellung einer eingangs beschriebenen Vielzahl unterschiedlicher Halterungen verzichtet werden, da der Übergang von einer Rohrleitung auf die wenigstens zwei Messrohre durch die Messrohreinheit selbst bereitgestellt wird. Zudem weist die erfindungsgemäße Messrohreinheit den Vorteil auf, dass das zu vermessende Fluid im Betrieb im Durchflussmessgerät mit nur einem Material Kontakt aufweist.

Gemäß einer ersten Ausgestaltung der erfindungsgemäßen Messrohreinheit ist der Gesamtquerschnitt kreisförmig ausgestaltet. Besonders bevorzugt entspricht der Durchmesser des Gesamtquerschnitts im Wesentlichen dem Durchmesser der einen anzubindenden Rohrleitung. In Bezug auf den Strömungsverlauf des Fluids im Übergangsbereich zwischen der einen Rohrleitung und den Übergangsstücken ist eine kreisförmige Ausgestaltung des Gesamtquerschnitts, wobei der Durchmesser des Gesamtquerschnitts im Wesentlichen dem Durchmesser der einen Rohrleitung entspricht, besonders günstig. Ebenfalls vorteilhaft ist es, wenn die Form des Gesamtquerschnitts geringfügig von einer Kreisform abweicht. Denkbar ist es beispielsweise, wenn der Gesamtquerschnitt die Form eines Kleeblatts oder eines Quadrats aufweist oder eine Verbindung aus Kreissegmenten darstellt.

Weiterhin ist es vorteilhaft, wenn die Übergangsstückquerschnitte die gleiche Form und die gleiche Größe aufweisen. Gemäß dieser Ausgestaltung ist sichergestellt, dass der Fluidstrom im Betrieb gleichmäßig auf die einzelnen Messrohre aufgeteilt wird.

Gemäß einer weiteren vorteilhaften Ausgestaltung weist der Übergangsstückquerschnitt zumindest eines Übergangsstücks die Form eines Halbkreises oder eines Viertelkreises oder eines Kreissegments auf. Die Form des Übergangsstückquerschnitts ist dabei insbesondere abhängig von der Anzahl der Messrohre. Weist die Messrohreinheit zwei Messrohre mit jeweils einem Übergangsstück auf, so ist der Übergangsstückquerschnitt jedes Übergangsstücks vorzugsweise halbkreisförmig. Weist die Messrohreinheit vier Messrohre mit jeweils einem Übergangsstück auf, so ist der Übergangsstückquerschnitt jedes Übergangsstücks vorzugsweise viertelkreisförmig. Daneben ist es auch vorteilhaft, wenn die Übergangsstückquerschnitte die Form eines Kreissegments oder eines Kreisausschnittes oder eines Dreiecks aufweisen.

Besonders bevorzugt ist es, wenn die Fläche des Übergangsstückquerschnitts größer ist als die Fläche des zugehörigen Messrohrquerschnitts und wenn das Übergangsstück in Strömungsrichtung gesehen eine Durchmesserreduzierung aufweist. Diese Ausgestaltung der Messrohreinheit wird beispielsweise eingesetzt, wenn die Querschnittsfläche der einen Rohrleitung größer ist, als der Messrohrquerschnitt. Dies ist insbesondere der Fall, wenn die Messrohreinheit wenigstens zwei Messrohre oder wenigstens vier Messrohre aufweist.

Daneben ist es ebenfalls vorteilhaft, wenn die Fläche des Übergangsstückquerschnitts kleiner ist, als die Fläche des zugehörigen Messrohrquerschnitts und wenn das Übergangsstück in Strömungsrichtung gesehen eine Durchmesservergrößerung aufweist. Diese Ausgestaltung wird insbesondere eingesetzt, wenn die Querschnittsfläche der einen Rohrleitung kleiner ist, als der Messrohrquerschnitt.

Eine weitere Ausgestaltung der Messrohreinheit weist wenigstens zwei weitere Übergangsstücke auf, wobei jeweils ein Übergangsstück an einem Messrohr am Auslassende angeordnet ist, wobei jedes Übergangsstück am Auslass einen Übergangsstückquerschnitt aufweist, wobei das Übergangsstück einstückig mit dem zugehörigen Messrohr ausgestaltet ist und wobei der Übergangsstückquerschnitt in seiner Form und/oder in seiner Größe von dem zugehörigen Messrohrquerschnitt abweicht, wobei die Messrohre derart angeordnet sind, dass die Übergangsstückquerschnitte einen Gesamtquerschnitt bilden. Diese Ausgestaltung weist den Vorteil auf, dass nicht nur einlassseitig sondern auch auslassseitig ein strömungstechnisch vorteilhafter Übergang von wenigstens zwei Messrohren auf eine Rohrleitung gewährleistet werden kann.

In Bezug auf die Ausgestaltung des auslassseitigen Übergangsstücks, insbesondere des Übergangsstückquerschnitts wird auf die Merkmale der einlassseitig angeordneten Übergangsstücke verwiesen. Auch alle im Folgenden beschriebenen Ausgestaltungen beziehen sich sowohl auf einlassseitig als auch auf auslassseitig angeordnete Übergangsstücke.

Besonders bevorzugt sind die auslassseitigen Übergangsstücke identisch mit den am Einlassende angeordneten Übergangsstücken ausgestaltet. Alternativ können sie ebenfalls insbesondere in der Form des Übergangsstückquerschnitts von den einlassseitig angeordneten Übergangsstücken abweichen.

Gemäß einer weiteren bevorzugten Ausgestaltung sind das Übergangsstück und das zugehörige Messrohr aus einem Werkstück hergestellt. Besonders bevorzugt ist das Übergangsstück eine Verformung der Endgeometrie des Messrohrs, wobei vorzugsweise die Wandstärke des Messrohrs erhalten bleibt. Insofern sind das Übergangsstück und das zugehörige Messrohr vorzugsweise aus einem Rohr gefertigt.

Das Übergangsstück oder die Einheit aus Übergangsstück und Messrohr ist beispielsweise durch ein mechanisches Umformverfahren hergestellt. Dies weist den Vorteil auf, dass das Übergangsstück bzw. die Einheit aus Übergangsstück und Messrohr besonders fließende Übergänge aufweist.

Alternativ kann das Übergangsstück oder die Einheit aus Übergangsstück und Messrohr mittels Hochdruckumformen, insbesondere mittels Innenhochdruckumformen, hergestellt sein. Dies weist den Vorteil auf, dass aufgrund der besonders hohen Präzision des Verfahrens, das Übergangsstück bzw. die Einheit aus Übergangsstück und Messrohr ebenfalls eine besonders hohe Präzision hinsichtlich ihrer Form und ihrer Abmessung aufweist.

Alternativ kann das Übergangsstück oder die Einheit aus Übergangsstück und Messrohr mittels auch mittels Lasersintern oder mittels eines 3-D Druckverfahrens hergestellt sein. Der Vorteil dieser Verfahren besteht darin, dass beliebige Geometrien erzeugt werden können, sodass die Geometrie des Übergangsstücks beliebig komplex sein kann. Zudem weist das Übergangsstück bzw. die Einheit aus Übergangsstück und Messrohr ebenfalls eine besonders hohe Präzision hinsichtlich ihrer Form und ihrer Abmessung auf.

Gemäß einer weiteren Ausgestaltung der erfindungsgemäßen Messrohreinheit grenzen die Übergangsstücke endseitig in gemeinsamen Berührkonturen aneinander und sind in den Berührkonturen dicht miteinander verbunden. Gemäß dieser Ausgestaltung wird gewährleistet, dass das zu vermessende Fluid im Betrieb nicht an den Übergangsstücken vorbei in das Durchflussmessgerät auslaufen kann.

Vorzugsweise sind die Übergangsstücke im Bereich der Berührkonturen formschlüssig, kraftschlüssig und/oder stoffschlüssig miteinander verbunden.

Gemäß einer zweiten Lehre der vorliegenden Erfindung wird die eingangs dargelegte Aufgabe durch eingangs genanntes Coriolis-Massedurchflussmessgerät dadurch gelöst, dass das Übergangsstück einstückig mit dem zugehörigen Messrohr ausgestaltet ist und dass der Übergangsstückquerschnitt in seiner Form und/oder in seiner Größe von dem zugehörigen Messrohrquerschnitt abweicht, wobei die Messrohre derart angeordnet und ausgerichtet sind, dass die Übergangsstückquerschnitte einen Gesamtquerschnitt und damit einen Strömungsteiler bilden.

Gemäß einer bevorzugten Ausgestaltung des Coriolis-Massedurchflussmessgeräts weist das Messgerät eine der zuvor beschriebenen Messrohreinheiten auf. Die zu der jeweiligen Messrohreinheit gemachten Ausführungen gelten gleichfalls für ein Coriolis-Massedurchflussmessgerät, das eine solche Messrohreinheit aufweist.

Gemäß einer weiteren Ausgestaltung ist wenigstens eine Halterung mit einer Aufnahme für die Messrohreinheit vorhanden, wobei die Aufnahme dicht mit der Messrohreinheit abschließt.

Im Einzelnen gibt es nun eine Vielzahl von Möglichkeiten, die erfindungsgemäße Messrohreinheit und das Coriolis-Massedurchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen:
- Fig. 1: eine Anordnung aus dem Stand der Technik,
- Fig. 2: eine Schnittdarstellung der Anordnung aus dem Stand der Technik,
- Fig. 3: ein Messrohr mit Übergangsstück einer erfindungsgemäßen Messrohreinheit,
- Fig. 4: ein Messrohr mit Übergangsstück einer erfindungsgemäßen Messrohreinheit,
- Fig. 5a - 5d: Ausführungsbeispiele der Übergangsstückquerschnitte bzw. des Gesamtquerschnitts
- Fig. 6: ein erstes Ausführungsbeispiel einer erfindungsgemäßen Messrohreinheit,
- Fig. 7: eine erste Schnittdarstellung des ersten Ausführungsbeispiels einer erfindungsgemäßen Messrohreinheit und
- Fig. 8: eine zweite Schnittdarstellung des ersten Ausführungsbeispiels einer erfindungsgemäßen Messrohreinheit und
- Fig. 9: ein erstes Ausführungsbeispiel eines erfindungsgemäßen Coriolis-Massedurchflussmessgeräts.

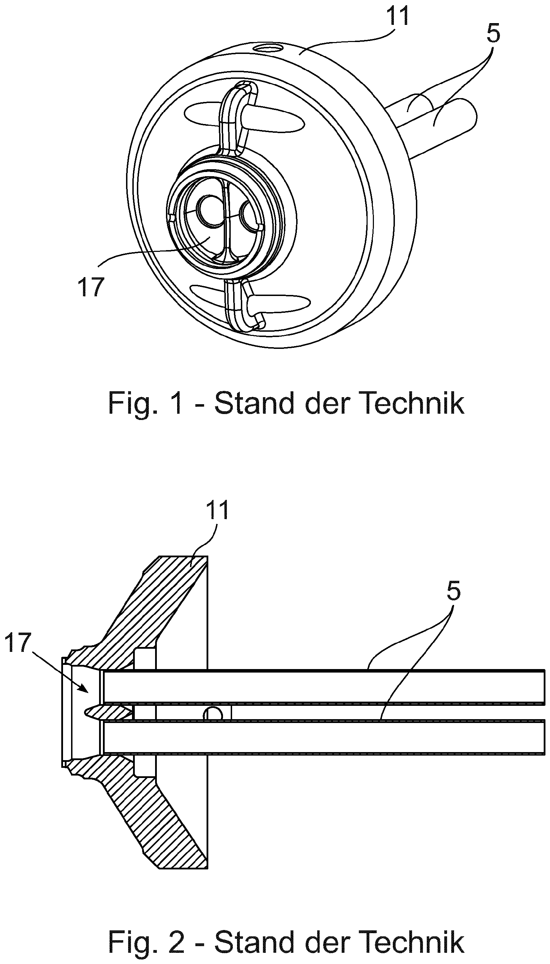

In Fig. 1 ist dargestellt eine Anordnung aus zwei Messrohren 5 und einer Halterung 11 zur Aufnahme des hier nicht dargestellten Gehäuses eines Coriolis-Massedurchflussmessgeräts aus dem Stand der Technik. Die Anordnung ist geeignet zur Anbindung von zwei Messrohren 5 an eine Rohrleitung. Dazu weist die Halterung 11 einen Anbindungsbereich 17 auf, wobei der Anbindungsbereich 17 als Strömungsteiler im Betrieb den Fluidstrom gleichmäßig auf die Messrohre 5 aufteilt. Nachteilig an der dargestellten Anordnung ist, dass die Halterung 11, die ebenfalls als Anschluss an die Rohrleitung und als Strömungsteiler dient, auf einen Messaufbau, hier bestehend aus zwei Messrohren 5 angepasst ist. Unterschiedliche Messaufbauten erfordern daher verschiedene Halterungen 11, deren Herstellung jedoch aufgrund ihrer Komplexität relativ aufwendig ist.

Fig. 2 zeigt ebenfalls eine Anordnung zur Anbindung zweier Messrohre 5 an eine Rohrleitung über eine Halterung 11 aus dem Stand der Technik in Schnittdarstellung. Der Anbindungsbereich 17 ist derart ausgestaltet, dass er als Strömungsteiler im Betrieb den Fluidstrom, der durch die hier nicht dargestellte angebundene Rohrleitung fließt, auf die Messrohre 5 aufteilt. Die Messrohre 5 sind über eine Schweißverbindung mit dem Anbindungsbereich 17 verbunden.

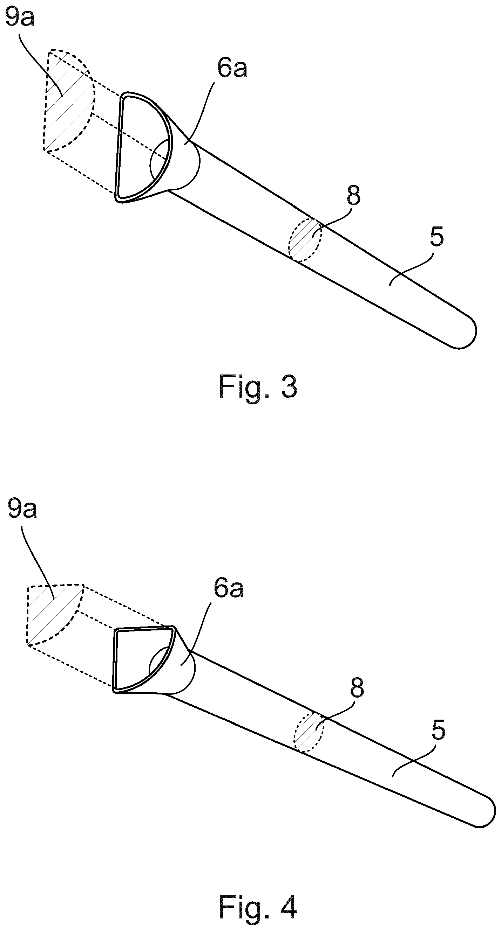

Die Fig. 3 und 4 zeigen jeweils Ausführungsbeispiele eines Messrohrs 5 und eines Übergangsstücks 6a, wobei das Übergangsstück 6a jeweils einstückig mit dem Messrohr 5 ausgestaltet ist. Das Messrohr 5 weist einen kreisförmigen Messrohrquerschnitt 8 und das Übergangsstück 6a am Einlass einen Übergangsstückquerschnitt 9a auf.

Der in Fig. 3 gezeigte Übergangsstückquerschnitt 9a ist halbkreisförmig ausgestaltet, im Verlauf des Übergangsstücks 6a weist dieser einen Übergang zu dem kreisförmigen Messrohrquerschnitt 8 des Messrohrs 5 auf. Das in Fig. 3 dargestellte Messrohr 5 ist damit für den Einsatz in einer Messrohreinheit 1, bestehend aus zwei Messrohren 5 geeignet.

Der in Fig. 4 dargestellte Übergangsstückquerschnitt 9a ist viertelkreisförmig ausgestaltet und weist ebenfalls im Verlauf des Übergangsstücks 6a einen Übergang auf den kreisförmigen Messrohrquerschnitt 8 des Messrohrs 5 auf. Das in Fig. 4 dargestellte Messrohr 5 ist damit für den Einsatz in einer Messrohreinheit 1 bestehend aus vier Messrohren 5 geeignet.

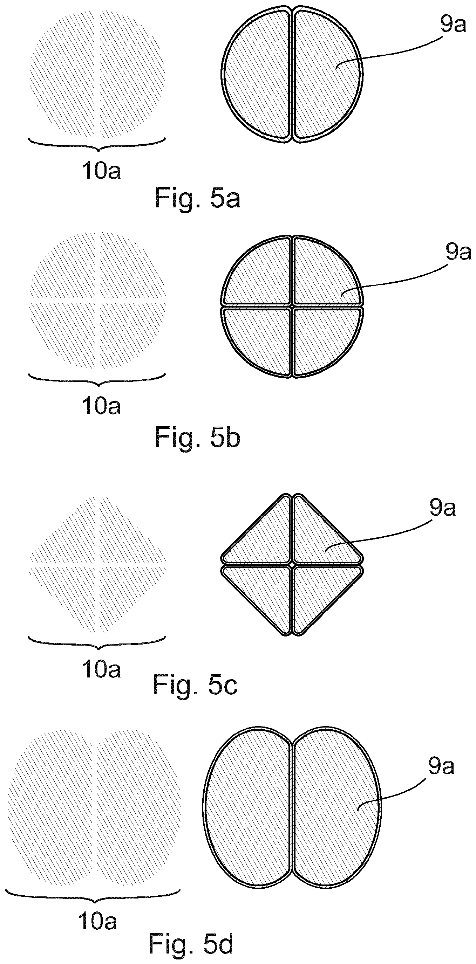

In den Fig. 5a bis 5d sind jeweils Ausführungsbeispiele von Übergangsstückquerschnitten 9a bzw. Gesamtquerschnitten 10a dargestellt. In Fig. 5a sind die Übergangsstücksquerschnitte 9a halbkreisförmig ausgestaltet. Zusammen bilden die Übergangsstückquerschnitte 9a einen kreisförmigen Gesamtquerschnitt 10a. Die in Fig. 5b dargestellten Übergangsquerschnitte 9a haben jeweils die Form eines Viertelkreises, wobei der Gesamtquerschnitt 10a ebenfalls kreisförmig ist. Die in Fig. 5c dargestellten Übergangsstückquerschnitte 9a sind dreieckförmig ausgestaltet und bilden zusammen einen Gesamtquerschnitt 10a in Form eines Quadrats. Die in Fig. 5d dargestellten Übergangsstückquerschnitte 9a weisen die Form eines Kreissegments auf, wobei der Gesamtquerschnitt 10a geringfügig von der Kreisform abweicht.

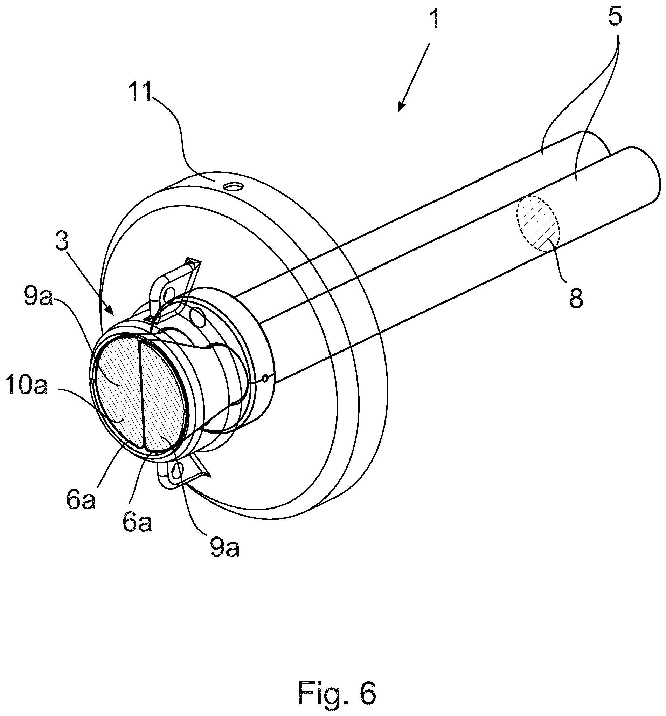

Fig. 6 zeigt ein erstes Ausführungsbeispiel einer erfindungsgemäßen Messrohreinheit 1 für den Einsatz in einem Coriolis-Massedurchflussmessgerät 2 mit einem Einlassende 3 und einem hier nicht dargestellten Auslassende 4, mit zwei Messrohren 5 und zwei Übergangsstücken 6a, wobei jedes Messrohr einen Messrohrquerschnitt 8 und jedes Übergangsstück 6a am Einlass einen Übergangsstückquerschnitt 9a aufweisen. Dabei sind die Übergangsstücke 6a einstückig mit dem jeweils zugehörigen Messrohr 5 ausgestaltet, im dargestellten Ausführungsbeispiel sind sie aus einem Werkstück gefertigt. Die Messrohre 5 sind derart angeordnet, dass die Übergangsstückquerschnitte 9a einen kreisförmigen Gesamtquerschnitt 10a, der identisch mit dem Rohrleitungsquerschnitt der hier nicht dargestellten anzubindenden Rohrleitung ist. Im verbundenen Zustand dienen die beiden Übergangsstücke 6a einerseits zur Anbindung der beiden Messrohre 5 an eine Rohrleitung und teilen gleichzeitig im Betrieb den durch die Rohrleitung fließenden Fluidstrom gleichmäßig auf die Messrohre 5 auf. Der Einsatz einer Messrohreinheit 1 hat damit den Vorteil, dass die Halterung 11 in Bezug auf den Messaufbau keine besonderen Anforderungen erfüllen muss. Insofern kann die aufwendig zu fertigende Halterung 11 besonders flexibel eingesetzt werden.

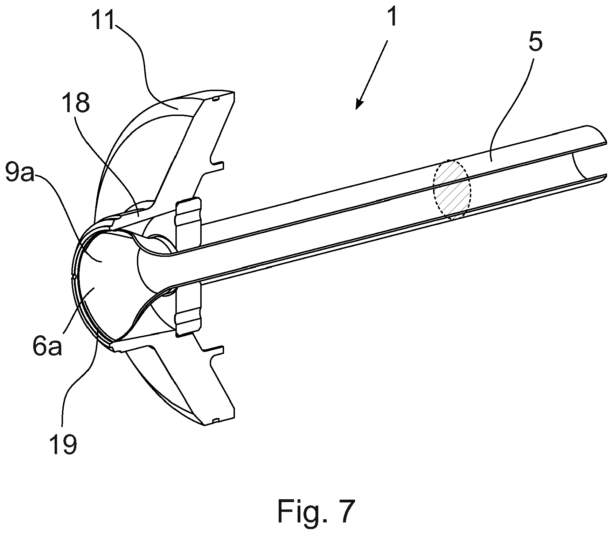

Fig. 7 zeigt eine Schnittdarstellung des ersten Ausführungsbeispiels der erfindungsgemäßen Messrohreinheit 1, wobei ein Messrohr 5 und ein Übergangsstück 6a mit einem halbkreisförmigen Übergangsstückquerschnitt 9a dargestellt sind. Ebenfalls dargestellt ist eine Halterung 11 mit einer Aufnahme 18 für die Messrohreinheit 1, wobei die Aufnahme 18 im Randbereich 19 dicht mit der Messrohreinheit 1, im Detail mit den Übergangsstücken 6a abschließt.

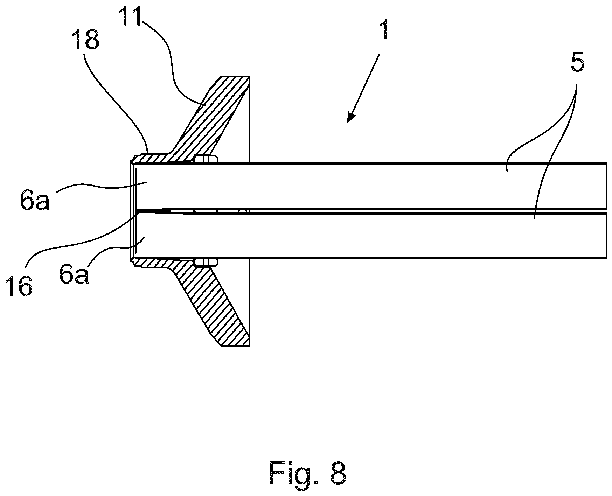

Fig. 8 zeigt das erste Ausführungsbeispiel einer erfindungsgemäßen Messrohreinheit 1 in Schnittdarstellung in der Draufsicht. Die Übergangsstücke 6a grenzen endseitig in Berührkonturen 16 aneinander und sind in den Berührkonturen 16 dicht miteinander verbunden.

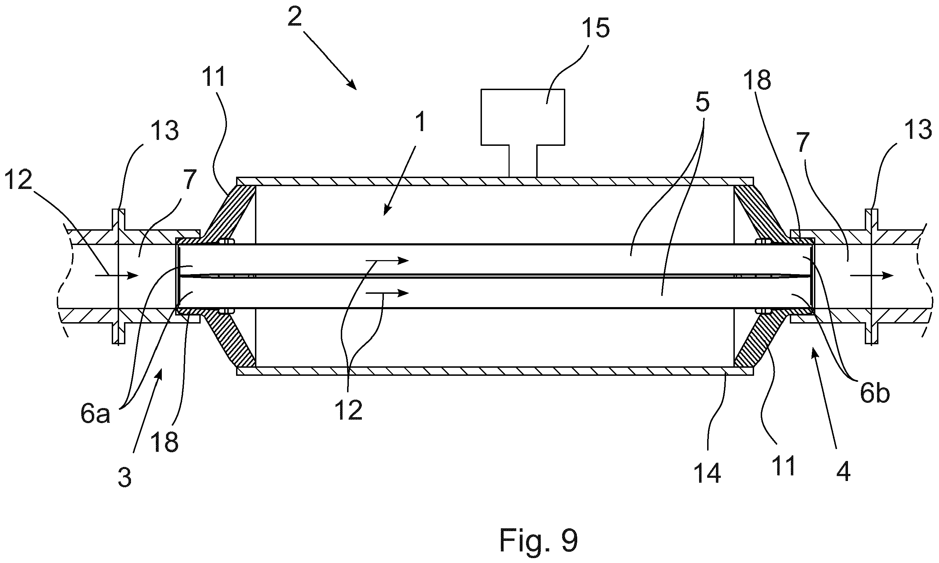

Fig. 9 zeigt ein erstes Ausführungsbeispiel eines erfindungsgemäßen Coriolis-Massedurchflussmessgeräts 2 mit einer Messrohreinheit 1 mit einem Einlassende 3 und einem Auslassende 4, wobei die Messrohreinheit 1 zwei Messrohre 5 und sowohl am Einlassende 3 als auch am Auslassende 4 jeweils zwei Übergangsstücke 6a, 6b aufweist, die mit jeweils einem Messrohr 5 einstückig verbunden sind. Die Übergangsstücke 6a, 6b dienen der Anbindung an eine Rohrleitung 7, welche im Betrieb von einem Fluid in Pfeilrichtung 12 durchströmt wird. Die Verbindung des Durchflussmessgeräts 2 mit der externen Rohrleitung erfolgt über eine Flanschverbindung 13. Dargestellt sind ebenfalls das Gehäuse 14 des Durchflussmessgeräts 2, in dem auch die weiteren üblicherweise vorhandenen Komponenten, wie beispielsweise Schwingungserzeuger und Schwingungsaufnehmer angeordnet sind. Darüber hinaus weist das Coriolis-Massedurchflussmessgerät 2 eine Steuer- und Auswerteeinheit 15 zur Steuerung der Schwingungsanregung und zur Auswertung und Anzeige der aufgenommenen Messdaten auf. Zudem weist das Durchflussmessgerät 2 sowohl einlassseitig als auch auslassseitig eine Halterung 11 zur Aufnahme des Gehäuses 14 auf, wobei die Halterung 11 ebenfalls eine Aufnahme 18 für die Messrohreinheit 1 aufweist und wobei die Messrohreinheit 1 in der Aufnahme 18 angeordnet ist.

Das dargestellte Ausführungsbeispiel des erfindungsgemäßen Coriolis-Massedurchflussmessgeräts weist die erfindungsgemäßen Vorteile einer besonders einfachen und effektiven Ankopplung von zwei Messrohren 5 an eine Rohrleitung 7 auf.

### Bezugszeichen

- 1: Messrohreinheit
- 2: Coriolis-Massedurchflussmessgerät
- 3: Einlassende
- 4: Auslassende
- 5: Messrohr
- 6a: Übergangsstück einlassseitig
- 6b: Übergangsstück auslassseitig
- 7: Rohrleitung
- 8: Messrohrquerschnitt
- 9a: Übergangsstückquerschnitt einlassseitig
- 9b: Übergangsstückquerschnitt auslassseitig
- 10a: Gesamtquerschnitt einlassseitig
- 10b: Gesamtquerschnitt auslassseitig
- 11: Halterung
- 12: Strömungsrichtung
- 13: Flanschverbindung
- 14: Gehäuse
- 15: Steuer- und Auswerteeinheit
- 16: Berührkontur
- 17: Anbindungsbereich
- 18: Aufnahme
- 19: Randbereich

## Patentansprüche

1. Messrohreinheit (1) für den Einsatz in einem Coriolis-Massedurchflussmessgerät (2) mit einem Einlassende (3) und einem Auslassende (4), umfassend wenigstens zwei Messrohre (5) und wenigstens zwei Übergangsstücke (6a), wobei jeweils ein Übergangsstück (6a) an einem Messrohr (5) am Einlassende (3) angeordnet ist, wobei jedes Messrohr (5) einen Messrohrquerschnitt (8) und jedes Übergangsstück (6a) am Einlass einen Übergangsstückquerschnitt (9a) aufweist,
wobei das Übergangsstück (6a) einstückig mit dem zugehörigen Messrohr (5) ausgestaltet ist und dass der Übergangsstückquerschnitt (9a) in seiner Form und/oder in seiner Größe von dem zugehörigen Messrohrquerschnitt (8) abweicht,
**dadurch gekennzeichnet,**
**dass** die Messrohre (5) derart angeordnet und ausgerichtet sind, dass die Übergangsstückquerschnitte (9a) einen Gesamtquerschnitt (10a) und damit einen Strömungsteiler bilden, und dass das Übergangsstück (6a) in seiner Ausgestaltung einerseits an den Querschnitt der einen anzubindenden Rohrleitung (7) und gleichzeitig an den Messaufbau, im Detail an die Anzahl der Messrohre (5) angepasst ist.

2. Messrohreinheit (1) nach Anspruch 1, **dadurch gekennzeichnet, dass** der Gesamtquerschnitt (10a) kreisförmig ausgestaltet ist.

3. Messrohreinheit (1) nach einem der Ansprüche 1 oder 2, **dadurch gekennzeichnet, dass** die Übergangsstückquerschnitte (9a) die gleiche Form und die gleiche Größe aufweisen.

4. Messrohreinheit (1) nach einem der Ansprüche 1 bis 3, **dadurch gekennzeichnet, dass** der Übergangsstückquerschnitt (9a) zumindest eines Übergangsstückes (6a) die Form eines Halbkreises oder eines Viertelkreises oder eines Kreissegments aufweist.

5. Messrohreinheit (1) nach einem der Ansprüche 1 bis 4, **dadurch gekennzeichnet, dass** die Fläche des Übergangsstückquerschnitts (9a) größer ist als die Fläche des zugehörigen Messrohrquerschnitts (8) und dass das Übergangsstück (6a) in Strömungsrichtung gesehen eine Durchmesserreduzierung aufweist.

6. Messrohreinheit (1) nach einem der Ansprüche 1 bis 4, **dadurch gekennzeichnet, dass** die Fläche des Übergangsstückquerschnitts (9a) kleiner ist als die Fläche des zugehörigen Messrohrquerschnitts (8) und dass das Übergangsstück (6a) in Strömungsrichtung gesehen eine Durchmesservergrößerung aufweist.

7. Messrohreinheit (1) nach einem der Ansprüche 1 bis 6, **dadurch gekennzeichnet, dass** wenigstens zwei weitere Übergangsstücke (6b) vorhanden sind, wobei jeweils ein Übergangsstück (6b) an einem Messrohr (5) am Auslassende (4) angeordnet ist, wobei jedes Übergangsstück (6b) am Auslass einen Übergangsstückquerschnitt (9b) aufweist, wobei das Übergangsstück (6b) einstückig mit dem zugehörigen Messrohr (5) ausgestaltet ist und wobei der Übergangsstückquerschnitt (9b) in seiner Form und/oder in seiner Größe von dem zugehörigen Messrohrquerschnitt (8) abweicht, wobei die Messrohre (5) derart angeordnet sind, dass die Übergangsstückquerschnitte (9b) einen Gesamtquerschnitt (10b) bilden.

8. Messrohreinheit (1) nach Anspruch 7, **dadurch gekennzeichnet, dass** die Übergangsstücke (9b) identisch mit den am Einlassende (3) angeordneten Übergangsstücken (9a) ausgestaltet sind.

9. Messrohreinheit (1) nach einem der Ansprüche 1 bis 8, **dadurch gekennzeichnet, dass** das Übergangsstück (6a, 6b) und das zugehörige Messrohr (5) aus einem Werkstück hergestellt sind.

10. Messrohreinheit (1) nach einem der Ansprüche 1 bis 9, **dadurch gekennzeichnet, dass** das Übergangsstück (6a, 6b) oder die Einheit aus Übergangsstück (6a, 6b) und Messrohr (5) durch ein mechanisches Umformverfahren, durch Hochdruckumformen, durch Lasersintern oder durch ein 3D-Druckverfahren hergestellt ist.

11. Messrohreinheit (1) nach einem der Ansprüche 1 bis 10, **dadurch gekennzeichnet, dass** die Übergangsstücke (6a, 6b) endseitig in gemeinsamen Berührkonturen (16) aneinandergrenzen und in den Berührkonturen (16) dicht miteinander verbunden sind.

12. Messrohreinheit (1) nach Anspruch 11, **dadurch gekennzeichnet, dass** die Übergangsstücke (6a, 6b) im Bereich der Berührkonturen (16) formschlüssig, kraftschlüssig und/oder stoffschlüssig miteinander verbunden sind.

13. Coriolis-Massedurchflussmessgerät (2) mit wenigstens einer Messrohreinheit (1) mit einem Einlassende (3) und einem Auslassende (4), wobei die Messrohreinheit (1) wenigstens zwei Messrohre (5) und wenigstens zwei Übergangsstücke (6a) aufweist, wobei jeweils ein Übergangsstück (6a) an einem Messrohr (5) am Einlassende (3) der Messrohreinheit angeordnet ist, wobei jedes Messrohr (5) einen Messrohrquerschnitt (8) und jedes Übergangsstück (6a) am Einlass einen Übergangsstückquerschnitt (9a) aufweist, wobei das Übergangsstück (6a) einstückig mit dem zugehörigen Messrohr (5) ausgestaltet ist und dass der Übergangsstückquerschnitt (9a) in seiner Form und/oder in seiner Größe von dem zugehörigen Messrohrquerschnitt (8) abweicht,
**dadurch gekennzeichnet,**
**dass** die Messrohre (5) derart angeordnet und ausgerichtet sind, dass die Übergangsstückquerschnitte (9a) einen Gesamtquerschnitt (10a) und damit einen Strömungsteiler bilden, und dass das Übergangsstück (6a) in seiner Ausgestaltung einerseits an den Querschnitt der einen anzubindenden Rohrleitung (7) und gleichzeitig an den Messaufbau, im Detail an die Anzahl der Messrohre (5) angepasst ist.

14. Coriolis-Massedurchflussmessgerät (2) nach Anspruch 13, **dadurch gekennzeichnet, dass** die Messrohreinheit (1) gemäß einem der Ansprüche 1 bis 12 ausgestaltet ist.

15. Coriolis-Massedurchflussmessgerät (2) nach einem der Ansprüche 13 oder 14, **dadurch gekennzeichnet, dass** eine Halterung (11) mit einer Aufnahme (18) für die Messrohreinheit (1) vorhanden ist, wobei die Aufnahme (18) dicht mit der Messrohreinheit (1) abschließt.

## Claims

1. A measuring tube unit (1) for use in a Coriolis mass flowmeter (2) with an inlet end (3) and an outlet end (4), comprising at least two measuring tubes (5) and at least two transition pieces (6a), wherein, in each case, one transition piece (6a) is arranged on a measuring tube (5) at the inlet end (3), wherein each measuring tube (5) has a measuring tube cross section (8) and each transition piece (6a) has a transition piece cross section (9a) at the inlet,
wherein the transition piece (6a) is designed in one piece with the associated measuring tube (5), and that the transition piece cross section (9a) deviates in its shape and/or size from the associated measuring tube cross section (8),
**characterized in**
**that** the measuring tubes (5) are arranged and aligned in such a manner that the transition piece cross sections (9a) form an overall cross section (10a) and thus a flow divider, and
**that** the transition piece (6a) is adapted in its design, on the one hand, to the cross section of the pipes (7) to be attached and, at the same time, to the measurement configuration, in detail to the number of measuring tubes (5).

2. Measuring tube unit (1) according to claim 1, **characterized in that** the overall cross section (10a) has a circular design.

3. Measuring tube unit (1) according to claim 1 or 2, **characterized in that** the transition piece cross sections (9a) have the same shape and the same size.

4. Measuring tube unit (1) according to any one of claims 1 to 3, **characterized in that** the transition piece cross section (9a) of at least one transition piece (6a) has the form of a semicircle or a quarter circle or a circular segment.

5. Measuring tube unit (1) according to any one of claims 1 to 4, **characterized in that** the surface of the transition piece cross section (9a) is greater than the surface of the associated measuring tube cross section (8) and that the transition piece (6a) has a diameter decrease in respect to the direction of flow.

6. Measuring tube unit (1) according to any one of claims 1 to 4, **characterized in that** the surface of the transition piece cross section (9a) is less than the surface of the associated measuring tube cross section (8), and that the transition piece (6a) has a diameter increase in respect to the direction of flow.

7. Measuring tube unit (1) according to any one of claims 1 to 6, **characterized in that** at least two further transition pieces (6b) are provided, wherein, in each case, one transition piece (6b) is arranged on a measuring tube (5) at the outlet end, wherein each transition piece (6b) has a transition piece cross section (9b) at the outlet, wherein the transition piece (6b) is designed in one piece with the associated measuring tube (5) and wherein the transition piece cross section (9b) deviates in its shape and/or size from the associated measuring tube cross section (8), wherein the measuring tubes (5) are arranged in such a manner that the transition piece cross sections (9b) form an overall cross section (10b).

8. Measuring tube unit (1) according to claim 7, **characterized in that** the transition pieces (9b) are identical to the transition pieces (9a) arranged at the inlet end (3).

9. Measuring tube unit (1) according to any one of claims 1 to 8, **characterized in that** the transition piece (6a, 6b) and the associated measuring tube (5) are produced from one workpiece.

10. Measuring tube unit (1) according to any one of claims 1 to 9, **characterized in that** the transition piece (6a, 6b) or the unit of transition piece (6a, 6b) and measuring tube (5) is produced by a mechanical forming process, by high-pressure forming, by laser sintering or by a 3D printing process.

11. Measuring tube unit (1) according to any one of claims 1 to 10, **characterized in that** the transition pieces (6a, 6b) adjoin each other end-to-end in common contact contours (16) and are tightly connected to one another in the contact contours (16).

12. Measuring tube unit (1) according to claim 11, **characterized in that** the transition pieces (6a, 6b) are connected to one another in the form of a positive-locking, non-positive and/or material-locking connection in the region of the contact contours (16).

13. Coriolis mass flow meter (2) having at least one measuring tube unit (1) with an inlet end (3) and an outlet end (4), wherein the measuring tube unit (1) has at least two measuring tubes (5) and at least two transition pieces (6a), wherein, in each case, one transition piece (6a) is arranged on a measuring tube (5) on the inlet end (3) of the measuring tube unit, wherein each measuring tube (5) has a measuring tube cross section (8) and each transition piece (6a) has a transition piece cross section (9a) at the inlet,
wherein the transition piece (6a) is designed in one piece with the associated measuring tube (5), and that the transition piece cross section (9a) deviates in its shape and/or size from the associated measuring tube cross section (8),
**characterized in**
**that** the measuring tubes (5) are arranged and aligned in such a manner that the transition piece cross sections (9a) form an overall cross-section (10a) and thus a flow divider, and
**that** the transition piece (6a) is adapted in its design, on the one hand, to the cross section of the pipes (7) to be attached and, at the same time, to the measurement configuration, in detail to the number of measuring tubes (5).

14. Coriolis mass flow meter (2) according to claim 13, **characterized in that** the measuring tube unit (1) is designed according to any one of claims 1 to 12.

15. Coriolis mass flowmeter (2) according to claim 13 or 14, **characterized in that** a holder (11) with a receptacle (18) for the measuring tube unit (1) is provided, wherein the receptacle (18) is tightly connected to the measuring tube unit (1).

## Revendications

1. Unité de tubes de mesure (1) destinée à être utilisée dans un débitmètre massique à effet Coriolis (2) comprenant une extrémité d'entrée (3) et une extrémité de sortie (4), comportant au moins deux tubes de mesure (5) et au moins deux pièces de transition (6a), dans laquelle une pièce de transition (6a) est respectivement disposée sur un tube de mesure (5) au niveau de l'extrémité d'entrée (3), dans laquelle chaque tube de mesure (5) présente une section transversale (8) de tube de mesure et chaque pièce de transition (6a) présente une section transversale (9a) de pièce de transition au niveau de l'entrée,
dans laquelle la pièce de transition (6a) est configurée d'une seule pièce avec le tube de mesure (5) associé et la section transversale (9a) de pièce de transition diffère de par sa forme et/ou sa taille de la section transversale (8) de tube de mesure associée,
**caractérisée en ce que**
les tubes de mesure (5) sont disposés et orientés de telle sorte que les sections transversales (9a) de pièce de transition forment une section transversale globale (10a) et donc un diviseur d'écoulement, et **en ce que** la pièce de transition (6a) est adaptée dans sa configuration d'une part à la section transversale de l'une des conduites tubulaires (7) à raccorder et en même temps à la configuration de mesure, en détail au nombre des tubes de mesure (5).

2. Unité de tubes de mesure (1) selon la revendication 1, **caractérisée en ce que** la section transversale globale (10a) est configurée de manière circulaire.

3. Unité de tubes de mesure (1) selon l'une des revendications 1 ou 2, **caractérisée en ce que** les sections transversales (9a) de pièce de transition présentent la même forme et la même taille.

4. Unité de tubes de mesure (1) selon l'une des revendications 1 à 3, **caractérisée en ce que** la section transversale (9a) de pièce de transition d'au moins une pièce de transmission (6a) présente la forme d'un demi-cercle ou d'un quart de cercle ou d'un segment de cercle.

5. Unité de tubes de mesure (1) selon l'une des revendications 1 à 4, **caractérisée en ce que** l'aire de la section transversale (9a) de pièce de transition est supérieure à l'aire de la section transversale (8) de tube de mesure associée et **en ce que** la pièce de transition (6a) présente, vue dans le sens d'écoulement, une réduction de diamètre.

6. Unité de tubes de mesure (1) selon l'une des revendications 1 à 4, **caractérisée en ce que** l'aire de la section transversale (9a) de pièce de transition est inférieure à l'aire de la section transversale (8) de tube de mesure associée et **en ce que** la pièce de transition (6a) présente, vue dans le sens d'écoulement, une augmentation de diamètre.

7. Unité de tubes de mesure (1) selon l'une des revendications 1 à 6, **caractérisée en ce qu'**au moins deux autres pièces de transition (6b) sont prévues, une pièce de transition (6b) étant respectivement disposée sur un tube de mesure (5) au niveau de l'extrémité de sortie (4), chaque pièce de transition (6b) présentant une section transversale (9b) de pièce de transition au niveau de la sortie, la pièce de transition (6b) étant configurée d'une seule pièce avec le tube de mesure (5) associé et la section transversale (9b) de pièce de transition différant de par sa forme et/ou sa taille de la section transversale (8) de tube de mesure associée, les tubes de mesure (5) étant disposés de telle sorte que les sections transversales (9b) de pièce de transition forment une section transversale globale (10b).

8. Unité de tubes de mesure (1) selon la revendication 7, **caractérisée en ce que** les pièces de transition (9b) sont configurés de manière identique aux pièces de transition (9a) disposées au niveau de l'extrémité d'entrée (3).

9. Unité de tubes de mesure (1) selon l'une des revendications 1 à 8, **caractérisée en ce que** la pièce de transition (6a, 6b) et le tube de mesure (5) associé sont fabriqués à partir d'une pièce à travailler.

10. Unité de tubes de mesure (1) selon l'une des revendications 1 à 9, **caractérisée en ce que** la pièce de transition (6a, 6b) ou l'unité constituée de la pièce de transition (6a, 6b) et du tube de mesure (5) est fabriquée à l'aide d'un procédé de formage mécanique, par formage à haute pression, par frittage au laser ou par un procédé de fabrication additive.

11. Unité de tubes de mesure (1) selon l'une des revendications 1 à 10, **caractérisée en ce que** les pièces de transition (6a, 6b) sont adjacentes l'une à l'autre du côté frontal dans des contours de contact communs (16) et sont reliées de manière étanche l'une à l'autre dans les contours de contact (16).

12. Unité de tubes de mesure (1) selon la revendication 11, **caractérisée en ce que** les pièces de transition (6a, 6b) sont reliées l'une à l'autre par complémentarité de forme, à force et/ou par liaison de matière dans la région des contours de contact (16).

13. Débitmètre massique à effet Coriolis (2) comprenant au moins une unité de tubes de mesure (1) comprenant une extrémité d'entrée (3) et une extrémité de sortie (4), dans lequel l'unité de tubes de mesure (1) comporte au moins deux tubes de mesure (5) et au moins deux pièces de transition (6a), dans lequel une pièce de transition (6a) est respectivement disposée sur un tube de mesure (5) au niveau de l'extrémité d'entrée (3) de l'unité de tubes de mesure, dans lequel chaque tube de mesure (5) présente une section transversale (8) de tube de mesure et chaque pièce de transition (6a) présente une section transversale (9a) de pièce de transition au niveau de l'entrée,
dans lequel la pièce de transition (6a) est configurée d'une seule pièce avec le tube de mesure (5) associé et la section transversale (9a) de pièce de transition diffère de par sa forme et/ou sa taille de la section transversale (8) de tube de mesure associée,
**caractérisé en ce que**
les tubes de mesure (5) sont disposés et orientés de telle sorte que les sections transversales (9a) de pièce de transition forment une section transversale globale (10a) et donc un diviseur d'écoulement, et **en ce que** la pièce de transition (6a) est adaptée dans sa configuration d'une part à la section transversale de l'une des conduites tubulaires (7) à raccorder et en même temps à la configuration de mesure, en détail au nombre des tubes de mesure (5).

14. Débitmètre massique à effet Coriolis (2) selon la revendication 13, **caractérisé en ce que** l'unité de tubes de mesure (1) est configurée selon l'une des revendications 1 à 12.

15. Débitmètre massique à effet Coriolis (2) selon l'une des revendications 13 ou 14, **caractérisé en ce qu'**un support (11) doté d'un logement (18) pour l'unité de tubes de mesure (1) est prévu, le logement (18) étant fermé de manière étanche par l'unité de tubes de mesure (1).
